# EUROPEAN PATENT SPECIFICATION

(11) **EP 4 375 004 B1**
(45) Date of publication and mention of the grant of the patent: **25.03.2026**
(21) Application number: 23207468.2
(22) Date of filing: 02.11.2023
(51) Int. Cl.: B23K 26/244, B23K 101/38, H01M 50/528, H01M 50/536, H01M 50/538, H01M 50/54, H01M 50/15, H01M 50/176, H01M 50/533, H01M 50/534, H01M 10/0587

(54) **SECONDARY BATTERY AND METHOD OF MANUFACTURING SAID SECONDARY BATTERIE**
SEKUNDÄRBATTERIE UND HERSTELLUNGSVERFAHREN EINER SOLCHEN SEKUNDÄRBATTERIE
BATTERIE SECONDAIRE ET PROCÉDÉ DE FABRICATION DE CETTE BATTERIE SECONDAIRE

(30) Priority: 09.11.2022 KR 20220148482
(43) Date of publication of application: 29.05.2024
(73) Proprietor: Samsung SDI Co., Ltd., Yongin-si, Gyeonggi-do 17084 (KR)
(72) Inventor: Yeo, Ha Ram, Yongin-si, Gyeonggi-do 17084 (KR); Hwang, In Hyun, Yongin-si, Gyeonggi-do 17084 (KR); Kim, Bum Rae, Yongin-si, Gyeonggi-do 17084 (KR)
(74) Representative: Gulde & Partner

(56) References cited:
- EP-A1- 3 451 417
- EP-A1- 4 037 048
- US-A1- 2013 252 053
- JOHN C. ION: "Laser processing of engineering materials", REFEREX, 31 December 2005 (2005-12-31), pages 1 - 589, XP040425979

## Description

### BACKGROUND

### 1. Field

Aspects of embodiments of the present disclosure relate to a secondary battery.

### 2. Description of the Related Art

A secondary battery may include an electrode assembly, which includes a positive electrode plate and a negative electrode plate that are wound or stacked with a separator interposed therebetween, a case accommodating the electrode assembly and an electrolyte, and a cap assembly sealing the case. In the electrode assembly, substrate tabs (e.g., uncoated tabs) protruding toward a side or upper portion are gathered to one side and bent on a current collector. Then, the substrate tabs and the current collector may be welded together with a laser. Alternatively, the substrate tabs may be gathered to one side, the current collector may be placed thereon and pressed, and then, the substrate tabs and the current collector may be welded together with a laser. Examples for such methods may be found in EP 3 451 417 A1 or EP 4 037 048 A1 and in non-patent literature by John C. Ion in "Laser processing of engineering materials", Elsevier, 2005.

However, during the laser welding, an amount of generated spatter varies according to a welding direction and/or an angle or an orientation formed during the processing of the substrate tab or the current collector. Therefore, uniform welding quality may not be maintained.

The above information disclosed in this Background section is for enhancement of understanding of the background of the present disclosure, and therefore, it may contain information that does not constitute the related (or prior) art.

### SUMMARY

Embodiments of the present disclosure provide a secondary battery having an improved electrode assembly welding structure.

A secondary battery, according to an embodiment of the present disclosure, includes: an electrode assembly; a case accommodating the electrode assembly; and a cap assembly sealing the case and including a pair of current collector plates. The electrode assembly includes a first electrode plate having a first substrate tab extending in one direction, a second electrode plate having a second substrate tab extending in another direction than the first substrate tab, and a separator interposed between the first electrode plate and the second electrode plate. Each of the current collector plates is electrically connected to one of the first substrate tab and the second substrate tab. The current collector plates are laser-welded to the first substrate tab and the second substrate tab, respectively, and a direction of a laser welding portion is parallel to a metal processing direction of the corresponding current collector plate. The pair of current collector plates may be a first current collector plate and a second current collector plate. This secondary battery provides a reduced degree of welding spatter and thus an improved welding stability.

The first substrate tab and the second substrate tab are bent in one direction to be in surface contact with the respective current collector plates.

The first substrate tab and the second substrate tab are welded to back beads (back welding beads) formed on rear surfaces of the respective current collector plates by laser welding. In other words, the first substrate tab and the second substrate tab may be welded on a rear surface of the respective current collector plates by laser welding.

The metal processing direction may be an orientation of surface components (surface material structure) of the current collector plate which is formed through rolling.

The first electrode plate, the second electrode plate, and the separator may be stacked together, and the laser welding direction in the electrode assembly may be perpendicular to an arrangement direction of the first electrode plate and the second electrode plate. In other words, the first electrode plate, the second electrode plate, and the separator may be stacked together, and the direction of the laser welding portion may be perpendicular to an arrangement direction of the first electrode plate and the second electrode plate in the electrode assembly.

The current collector plate may have a plate shape, and (two) welding regions of the current collector plate may be separated and divided in a length direction. In other words, the first current collector plate and the second current collector plate may have a plate shape, and (two) welding regions of the second current collector plate may be separated and divided in a length direction and the (two) welding regions of the first current collector plate may be separated and divided in a length direction.

A protruding portion of the current collector plate in the length direction may be bent to protrude outwardly from the electrode assembly, and both welding regions (surfaces) of the current collector plate with respect to the protruding portion may be bent toward the electrode assembly. In other words, a protruding portion of the second current collector plate in the length direction may be bent to protrude outwardly from the electrode assembly, and both welding regions (surfaces) of the second current collector plate with respect to the protruding portion (of the second current collector plate) may be bent toward the electrode assembly and both welding regions (surfaces) of the first current collector plate with respect to the protruding portion (of the first current collector plate) may be bent toward the electrode assembly.

The welding regions may be both surfaces with respect to the protruding portion of the current collector plate.

Both ends of the current collector plate may protrude outwardly further than the welding region. In other words, both ends of the second current collector plate may protrude outwardly further than the welding region; and both ends of the first current collector plate may protrude outwardly further than the welding region. Ends may refer to the ends lengthwise.

The current collector plate may be made of the same material as the corresponding electrode plate. That is, the first current collector plate may be made of the same material as the first electrode plate. Further, the second current collector plate may be made of the same material as the second electrode plate. This has the advantageous effect that the quality of the laser welding portion is improved.

Preferably, the direction of the metal processing direction may be perpendicular to a longitudinal direction of the (first and second) current collector plates. For example, in case of a rectangular shaped current collector plate, the direction of the metal processing direction may be perpendicular to the longitudinal side of the current collector plate.

A method of manufacturing a secondary battery, according to an embodiment of the present disclosure comprises the following steps:
i) providing a secondary battery comprising:
   an electrode assembly comprising a first electrode plate having a first substrate tab extending in one direction, a second electrode plate having a second substrate tab extending in another direction than the first substrate tab, and a separator interposed between the first electrode plate and the second electrode plate, a case accommodating the electrode assembly and a cap assembly sealing the case and comprising a pair of current collector plates; and
ii) electrically connecting each of the current collector plates to one of the first substrate tab and second substrate tab, wherein the electrically connecting is performed by laser-welding and the direction of the laser-welding is performed in parallel to a metal processing direction of the corresponding current collector plate in order to form a laser welding portion.

Before step ii), the first substrate tab and the second substrate tab is bent in one direction to be in surface contact with the respective (first and second) current collector plates.

Then the current collector plate may be lifted and may be pressed against the corresponding substrate tabs and fixed, e.g. with a jig. E.g. the first current collector plate may be lifted and may be pressed against the first substrate tabs and fixed, e.g. with a jig.

The electrically connecting of the first substrate tab and the second substrate tab comprises forming back beads on a rear surface of the respective (first and second) current collector plates by the laser-welding.

Before providing the cap assembly of the secondary battery, each of the pair of current collector plates may be processed by a rolling process in order to provide the metal processing direction of the corresponding current collector plate.

Preferably, the direction of the metal processing direction may be perpendicular to a longitudinal direction of the current collector plate. For example, in case of a rectangular shaped current collector plate, the direction of the metal processing direction may be perpendicular to the longitudinal side of the current collector plate.

### BRIEF DESCRIPTION OF DRAWINGS

FIG. 1 is a perspective view illustrating a secondary battery according to an embodiment of the present disclosure.
FIG. 2 is a perspective view of a cap assembly and an electrode assembly of the secondary battery shown in FIG. 1.
FIG. 3 is a perspective view illustrating a part (A) of a current collecting structure shown in FIG. 2.
FIG. 4 is a cross-sectional view illustrating a welding method according to an embodiment of the present disclosure.
FIGS. 5a and 5b are photographs of laser welding portions of collector plates with different metal processing directions.
FIG. 6 is a photograph showing the orientation of metal grains according to a laser welding direction.
FIG. 7 is a view illustrating a collector plate when a welding method according to an embodiment of the present disclosure is applied thereto.
FIG. 8 is a view illustrating a collector plate when the welding method according to an embodiment of the present disclosure is not applied thereto.

### DETAILED DESCRIPTION

Embodiments of the present disclosure are provided herein to more completely describe aspects and features of the present disclosure to those of ordinary skill in the art. The following embodiments may be modified in various different forms, and the scope of the present disclosure is not limited to the following embodiments. Rather, these embodiments are provided so that the present disclosure will be thorough and complete and will convey the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Hereinafter, a secondary battery according to embodiments of the present disclosure will be described, in detail, with reference to the accompanying drawings.

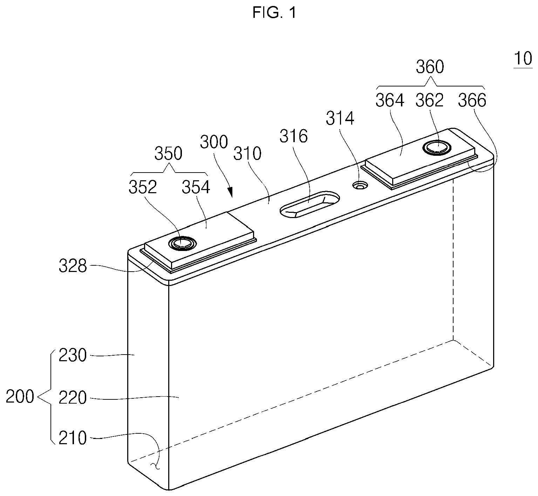

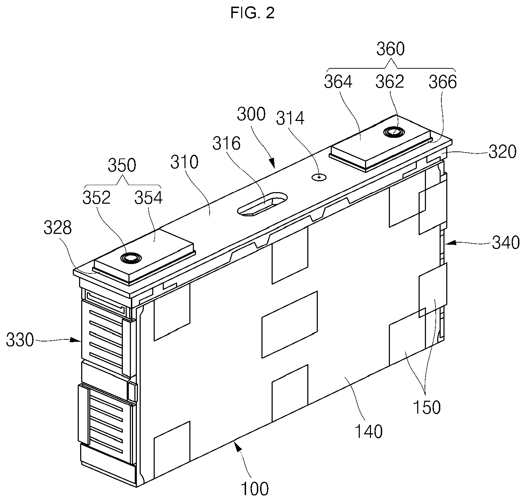

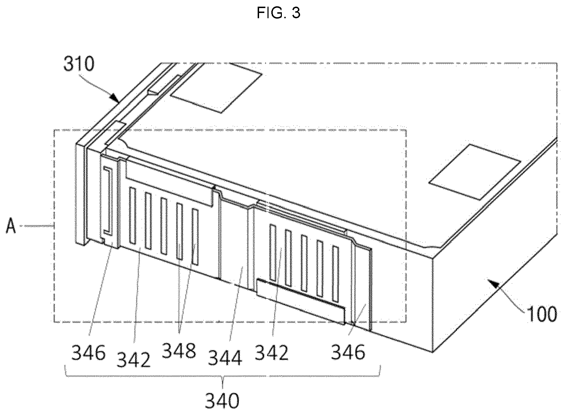

FIG. 1 is a perspective view illustrating a secondary battery according to an embodiment of the present disclosure. FIG. 2 is a perspective view of a cap assembly and an electrode assembly of the secondary battery shown in FIG. 1. FIG. 3 is a perspective view illustrating a part of a current collecting structure shown in FIG. 2. For convenience, in the description of FIG. 1, a direction of an upper portion is defined as an upward direction, and a direction of a lower portion is defined as a downward direction.

As shown in FIGS. 1 to 3, a secondary battery 10, according to an embodiment of the present disclosure, may include an electrode assembly 100, a case 200 accommodating the electrode assembly 100, and a cap assembly 300 coupled to the case 200. For example, the secondary battery 10 may be a prismatic battery in which the case 200 has a rectangular parallelepiped shape. However, this is merely an example, and the present disclosure can be applied to various types of secondary batteries.

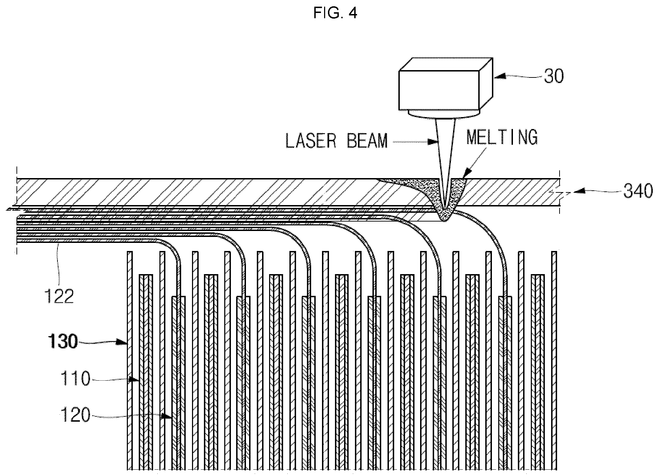

As shown in FIG. 2, the electrode assembly 100 may be formed by winding or stacking a plurality of unit stacks, each of which include a first electrode plate 110 and a second electrode plate 120 in the form of thin plates or films with a separator 130 interposed therebetween (see, e.g., FIG. 4). When the electrode assembly 100 is wound and formed, a winding shaft may be disposed in a horizontal direction approximately parallel to a length direction of the cap assembly 300 or in a vertical direction approximately perpendicular to the length direction of the cap assembly 300. When the electrode assembly 100 is stacked and formed, long side surfaces of the plurality of unit stacks may be disposed adjacent to each other. A sheet 140 made of an insulating material (e.g., an insulating sheet 140) may be attached to an outer portion of the electrode assembly 100 by an insulating tape 150 to insulate the electrode assembly 100 from the case 200. For example, the first electrode plate 110 may be a negative electrode, and the second electrode plate 120 may be a positive electrode. In other embodiments, however, the first electrode plate 110 may be a positive electrode, and the second electrode plate 120 may be a negative electrode.

When the first electrode plate 110 is a negative electrode plate, the first electrode plate 110 may be formed by applying a first electrode active material, such as graphite or carbon, on a first electrode current collector provided as a metal foil made of copper, a copper alloy, nickel, or a nickel alloy. The first electrode plate 110 may have a first uncoated portion, which is a region of the first electrode current collector on which the first electrode active material is not applied. Because the first uncoated portion acts as a tab electrically connected to a first collector plate 330, to be described below, the first uncoated portion may be defined as (or referred to as) a first substrate tab. A plurality of first substrate tabs may be bent to one side (e.g., may be bent in one direction) and welded to the first collector plate 330. The first collector plate 330 may be electrically connected to the cap assembly 300.

When the second electrode plate 120 is the positive electrode plate, the second electrode plate 120 may be formed by applying a second active material, such as a transition metal oxide, on a second electrode current collector provided as a metal foil made of copper, a copper alloy, nickel, or a nickel alloy. The second electrode plate 120 may have a second uncoated portion 122 (see, e.g., FIG. 4), which is a region of the second electrode current collector on which the second electrode active material is not applied. Because the second uncoated portion 122 acts as a tab electrically connected to a second collector plate 340, to be described below, the second uncoated portion 122 may be defined as (or may be referred to as) a second substrate tab. A plurality of second substrate tabs may be bent to one side (e.g., may be bent in one direction) and welded to the second collector plate 340. The second collector plate 340 may be electrically connected to the cap assembly 300.

The separator 130 is disposed between the first electrode plate 110 and the second electrode plate 120 to prevent a short circuit therebetween while enabling the movement of lithium ions therebetween. For example, the separator 130 may include polyethylene, polypropylene, or a composite film of polyethylene and polypropylene. However, the present disclosure is not limited to the above materials.

The electrode assembly 100 and an electrolyte may be accommodated in the case 200. In some embodiments, the electrolyte may include a lithium salt, such as LiPF₆ or LiBF₄, in an organic solvent, such as ethylene carbonate (EC), propylene carbonate (PC), diethyl carbonate (DEC), ethyl methyl carbonate (EMC), or dimethyl carbonate (DMC). In addition, the electrolyte may be in a liquid or gel state. In some embodiments, when an inorganic-based solid electrolyte is used, the liquid or gel electrolyte may be omitted.

As shown in FIG. 1, the case 200 may have an approximately rectangular parallelepiped box shape with an open upper portion thereof in a length direction and an accommodation space formed therein. The electrode assembly 100 and the electrolyte may be accommodated inside the case 200 through the open upper portion. Some components of the cap assembly 300 may be exposed to the outside of the case 200, and some components thereof may be accommodated inside the case 200. The case 200 may have a bottom surface 210 having a rectangular shape and four side surfaces connected to (e.g., extending from) the bottom surface 210. Among the side surfaces, a surface having a relatively large area is defined as a long side portion 220, and a surface having a relatively small area is defined as a short side portion 230. For example, the electrode assembly 100 may be disposed such that a plate surface (e.g., a large, flat surface) thereof faces the long side portion 220. When the electrode assembly 100 is accommodated in the case 200, the cap assembly 300 is coupled to the case 200 and electrically connected to the electrode assembly 100.

As shown in FIGS. 1 to 3, the cap assembly 300 may include a cap plate 310 coupled to the case 200, a plurality of insulating members, the first collector plate 330, the second collector plate 340, a first terminal 350, and a second terminal 360. Hereinafter, for convenience, only components related to a welding structure will be described in detail.

The cap plate 310 may have an approximately rectangular plate shape and may be made of the same material as the case 200. The cap plate 310 may have terminal holes (e.g., terminal openings) for coupling with the first terminal 350 and the second terminal 360, an injection hole (e.g., an injection opening) 314, and a vent hole (e.g., a vent opening) for coupling with a vent 316. The plurality of insulating members, including an insulating plate 320, may be provided to insulate the cap plate 310 from the electrode assembly 100.

The first collector plate 330 electrically connects the first electrode plate 110 via the first substrate tab. The first collector plate 330 electrically connects the first electrode plate 110, which may be the negative electrode plate, and the first terminal 350. To this end, the first collector plate 330 may be made of the same material as the first electrode plate 110. The first collector plate 330 may have an approximately rectangular shape. When a surface of the first collector plate 330 facing the electrode assembly 100 is defined as an inner surface and a surface opposite thereto is defined as an outer surface, the first collector plate 330 may have a concave-convex shape bent such that an approximately central portion thereof in a length direction protrudes outwardly (herein after called protruding portion). Therefore, the first collector plate 330 may have a shape in which both plate shapes with respect to the outwardly protruding central portion are bent toward the electrode assembly 100. For convenience, surfaces excluding the outwardly protruding central portion and outwardly protruding ends of the first collector plate 330 are defined as welding region (welding surfaces). Upper and lower surfaces of the first collector plate 330 may be welded except for the outwardly protruding central portion (protruding portion). For example, the first collector plate 330 may be electrically connected to the first substrate tab of the first electrode plate 110 by laser welding. After the first substrate tabs are gathered to one side for welding, the first collector plate 330 may be placed on the first substrate tabs, and end portions thereof may be bent on the first collector plate 330 and then laser welding may be performed.

The second collector plate 340 is disposed symmetrically with the first collector plate 330 and is electrically connected to the second electrode plate 120. In particular, the first collector plate 330 is electrically connected to the second electrode plate 120 via the second substrate tab 122. To this end, the second collector plate 340 may be made of the same material as the second substrate tab of the second electrode plate 120. The second collector plate 340 may have the same shape as the first collector plate 330 and may be disposed symmetrically with the first collector plate 330. A surface of the second collector plate 340 to be welded is also defined as a welding region 342 (welding surface) for convenience. After the second substrate tabs 122 are gathered to one side for welding, the second collector plate 340 may be placed on the second substrate tabs 122, end portions thereof may be bent on the second collector plate 340 and, then, laser welding may be performed. For example, a welding region 342 at where laser welding is performed may be a plate surface of a current collector plate (see, e.g., region A in FIG. 3).

The first terminal 350 may include a first terminal pin 352 and a first terminal plate 354. The first terminal plate 354 may be insulated from the cap plate 310 by an insulating member 328. The first terminal pin 352 is electrically connected to the first collector plate 330 and is electrically connected to the first electrode plate 110 of the electrode assembly 100.

The second terminal 360 may include a second terminal pin 362, a second terminal plate 364, and a conductive plate 366. The second terminal 360 is disposed symmetrically with the first terminal 350. The conductive plate 366 electrically connects the cap plate 310 and the second terminal plate 364, which is electrically connected to the second terminal pin 362. Thus, because the cap plate 310 is connected to the second collector plate 340 through the second terminal 360, the cap plate 310 may be electrically connected to the second electrode plate 120. Accordingly, the cap plate 310 has the same positive polarity as the second collector plate 340, and the case 200 welded to the cap plate 310 also has positive polarity.

Hereinafter, a welding method of an electrode assembly and a collector plate in a cap assembly including a current collecting structure will be described in detail. For convenience, FIG. 4 illustrates a welding method based on a second substrate tab 122 of a second electrode plate 120, but the same welding method can be applied to a first electrode plate 110 and a first substrate tab.

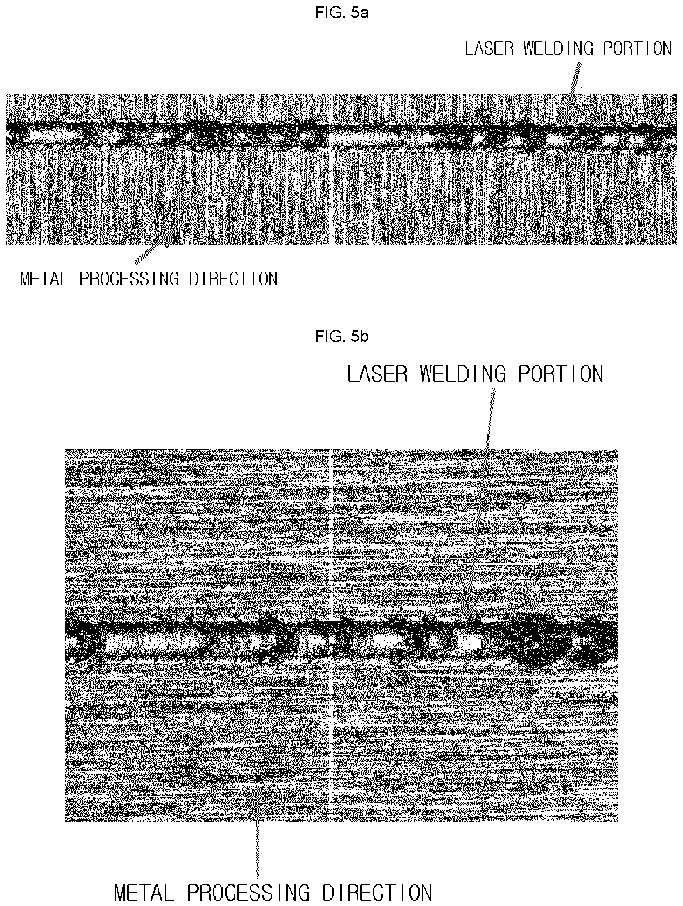

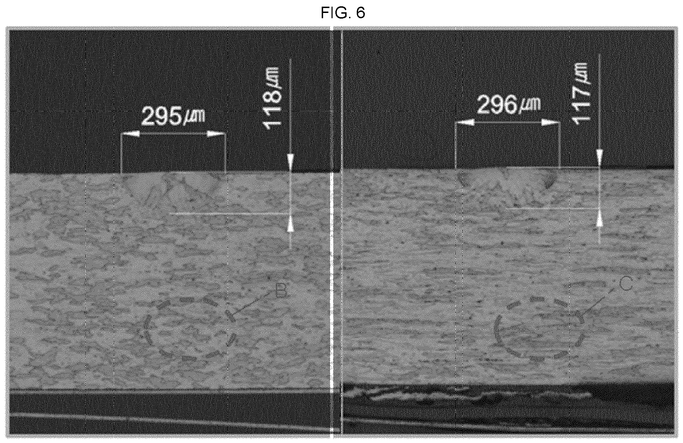

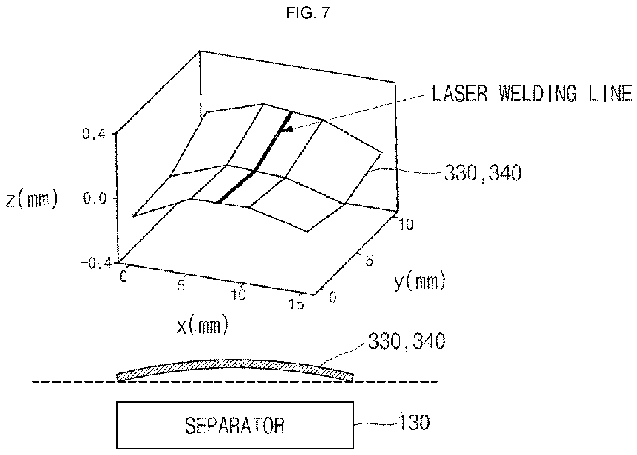

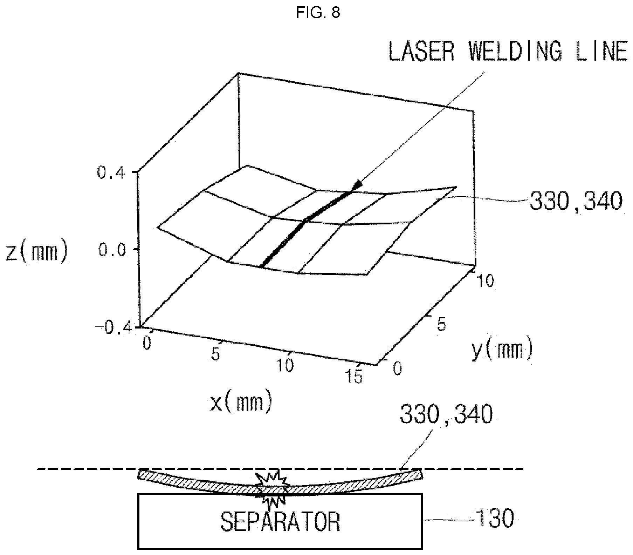

FIG. 4 is a cross-sectional view illustrating a welding method according to an embodiment of the present disclosure. FIGS. 5a and 5b are photographs showing a laser welding portion as a result of processing a metal of a current collector plate according to an embodiment of the present disclosure. In FIG. 5a the direction of the laser welding portion is perpendicular to metal processing direction of the current collector plate. In FIG. 5b the direction of the laser welding portion is parallel to the metal processing direction of the current collector plate. FIG. 6 are photographs showing the orientation of metal grains according to a laser welding direction as a result of processing (e.g. by rolling-processing) a metal of a current collector plate, such as the first current collector plate 330 or second current collector plate 340. FIG. 7 is a view illustrating a current collector plate according to another embodiment when a welding method according to an embodiment of the present disclosure is applied. FIG. 8 is a view illustrating a negative example of a current collector plate when the welding method according to an embodiment of the present disclosure is not applied.

As shown in FIG. 4, welding between an electrode assembly 100 and a second collector plate 340 may be performed through laser welding. For example, the second substrate tabs 122 are gathered to one side, and the second current collector plate 340 may be lifted and may be pressed against the second substrate tabs 122 and fixed with a jig or the like. Thereafter, a laser beam is radiated by a laser welding device 30 to melt the second current collector plate 340. During the laser welding, a rear surface of the second current collector plate 340 is partially melted so that the second current collector plate 340 and the second substrate tabs 122 are welded together. In other words, during the laser welding, a rear surface of the second current collector plate 340 is partially melted to form a back (welding) bead, so that the second current collector plate 340 and the second substrate tabs 122 are welded together to form a laser welding portion 348 in the welding region 342.

A metal plate, such as a current collector plate, is processed to have a certain shape and thickness through a rolling process or the like, and as shown in, for example, FIGS. 5a and 5b, a processing direction (hereinafter defined as a "metal processing direction") is generated on a surface of the metal plate. In other words, the direction of the manufacturing processing of the (metal) current collector plate (e.g. the direction of the rolling in a rolling process on the metal plate) causes the current collector plate to have a (uniformly) oriented material structure (herein called metal processing direction). During laser welding, a laser welding portion 348 is perpendicular or parallel to a metal processing direction or has a certain angle with respect to the metal processing direction. For example, the laser welding portion corresponds to a linear laser welding line. In other words, the laser welding portion may be a linear welding seam. In the welding regions 342 may be a plurality of laser welding portions 348 (e.g. linear welding seams). Preferably, the (linear) laser welding portion 348 may be parallel to a metal processing direction or has a certain angle with respect to the metal processing direction.

For example, a laser welding portion 348 may be perpendicular to a metal processing direction or a laser welding portion may be parallel to a metal processing direction, as shown in FIG. 6. The left side of FIG. 6 shows a state B of metal grains of a cross section of a collector plate when a laser welding portion is formed in a direction parallel to a metal processing direction (corresponding to FIG. 5b). The right side of FIG. 6 shows a state C of metal grains of a cross section of a collector plate when a laser welding portion is formed in a direction perpendicular to a metal processing direction (corresponding to FIG. 5a). In the cases of B and C, grains direction of the cross sections of the collector plates are different due to a difference in rolling direction. Accordingly, sizes and depths of the welding portions to be melted are also different. That is, when a laser welding portion is formed parallel to a metal processing direction, a melted portion is narrower and deeper. In this case, a degree of unevenness of a metal surface according to a welding direction is less than that of a case in which a laser welding portion is perpendicular to a metal processing direction. Accordingly, an amount of generated spatter can be reduced, and welding stability can be improved.

In addition, as shown in FIG. 7, when a laser welding line (i.e. the laser welding portion) is formed parallel to a metal processing direction, after welding, the first and second current collector plates 330 and 340 are deformed in a direction in which the first and second current collector plates 330 and 340 are convex toward the outside of an electrode assembly (or outside of the cell). However, as shown in FIG. 8, when a laser welding line (i.e. the laser welding portion) is formed perpendicular to a metal processing direction, after welding, the first and second current collector plates 330 and 340 are deformed in a direction toward the electrode assembly. In this case, due to deformation of the first and second current collector plates 330 and 340, the first and second current collector plates 330 and 340 may damage the electrode assembly. Therefore, the laser welding being performed parallel to a metal processing direction is an optimal direction in which weldability is improved and the electrode assembly is not damaged. In the past, during laser welding, welding has been performed without consideration for a metal processing direction. However, according to embodiments of the present disclosure, because a laser welding direction is determined in consideration of a metal processing direction, welding quality is improved.

According to embodiments of the present disclosure, as a result of processing a metal of a substrate tab or a current collector, a laser welding direction is arranged, thereby reducing or minimizing the occurrence of spatter. Because such arrangement is performed in consideration of deformation after welding, cell damage due to contact between a current collector and a separator may be prevented.

According to an embodiment, a secondary battery may include: an electrode assembly, a case accommodating the electrode assembly; and a cap assembly sealing the case and including a pair of current collector plates. The electrode assembly may include a first electrode plate having a first substrate tab extending in one direction, a second electrode plate having a second substrate tab extending in another direction, and a separator interposed between the first electrode plate and the second electrode plate. Each of the current collector plates may be electrically connected to one of the first substrate tab and the second substrate tab. The current collector plates may be laser-welded to the first substrate tab and the second substrate tab, respectively, and a laser welding direction may be parallel to a metal processing direction of the corresponding current collector plate.

The foregoing embodiments are only some embodiments for carrying out the present disclosure, which is not limited to the embodiments. Thus, it will be understood by a person skilled in the art that various changes in form and details may be made therein without departing from and scope of the present disclosure as defined by the following claims.

## Claims

1. A secondary battery (10) comprising:
an electrode assembly (100) comprising a first electrode plate (110) having a first substrate tab extending in one direction, a second electrode plate (120) having a second substrate tab (122) extending in another direction than the first substrate tab, and a separator (130) interposed between the first electrode plate (110) and the second electrode plate (120);
a case (200) accommodating the electrode assembly (100); and
a cap assembly (300) sealing the case (200) and comprising a pair of current collector plates (330, 340), each of the current collector plates (330, 340) being electrically connected to one of the first substrate tab and the second substrate tab (122), wherein the first substrate tab and the second substrate tab (122) are bent in one direction to be in surface contact with the respective collector plates (330, 340),
wherein the current collector plates (330, 340) are laser-welded to the first substrate tab and the second substrate tab (122), respectively, **characterized in that** the direction of a laser welding portion (348) is parallel to a metal processing direction of the corresponding current collector plate,
wherein the metal processing direction corresponds to a direction of manufacturing processing, which has caused the current collector plate to have a uniformly oriented material structure, and
wherein the first substrate tab and the second substrate tab (122) are welded to back beads formed on rear surfaces of the respective collector plates (330, 340) by laser welding.

2. The secondary battery according to claim 1, wherein the metal processing direction is an orientation of surface components of the current collector plate (330, 340) which is formed through rolling.

3. The secondary battery according to one of the proceeding claims, wherein the first electrode plate (110), the second electrode plate (120), and the separator (130) are stacked together, and
wherein the direction of the laser welding portion (348) is perpendicular to an arrangement direction of the first electrode plate (110) and the second electrode plate (120) in the electrode assembly.

4. The secondary battery according to one of the preceding claims, wherein the current collector plate (330, 340) has a plate shape, and
wherein welding regions (342) of the current collector plate (340) are separated and divided in a length direction.

5. The secondary battery of claim 4, wherein a protruding portion (344) of the current collector plate (330, 340) in the length direction is bent to protrude outwardly from the electrode assembly (100), and
wherein the welding regions (342) of the current collector plate (330, 340) with respect to the protruding portion (344) are bent toward the electrode assembly (100).

6. The secondary battery of claims 4 or 5, wherein both ends (346) of the current collector plate (330, 340) protrude outwardly further than the welding region (342).

7. The secondary battery of one of the proceeding claims, wherein the current collector plate (330) is made of the same material as the corresponding electrode plate (110).

8. A method of manufacturing a secondary battery, wherein the method comprises the following steps:
i) providing a secondary battery comprising:
an electrode assembly (100) comprising a first electrode plate (110) having a first substrate tab extending in one direction, a second electrode plate (120) having a second substrate tab (122) extending in another direction than the first substrate tab, and a separator (130) interposed between the first electrode plate (110) and the second electrode plate (120);
a case (200) accommodating the electrode assembly (100); and
a cap assembly (300) sealing the case (200) and comprising a pair of current collector plates (330, 340); and
ii) electrically connecting each of the current collector plates (330, 340) to one of the first substrate tab and to the second substrate tab (122); wherein before step ii), the first substrate tab and the second substrate tab (122) are bent in one direction to be in surface contact with the respective current collector plates (330, 340);
wherein the electrically connecting is performed by laser-welding and **characterized in that** the direction of the laser-welding is performed in parallel to a metal processing direction of the corresponding current collector plate in order to form a laser welding portion (348),
wherein the metal processing direction corresponds to a direction of manufacturing processing, which has caused the current collector plate to have a uniformly oriented material structure;
wherein before step ii), the first substrate tab and the second substrate tab (122) are bent in one direction to be in surface contact with the respective current collector plates (330,340): and
wherein electrically connecting of the first substrate tab and the second substrate tab comprises forming back beads on a rear surface of the respective current collector plates (330, 340) by the laser-welding

9. The method of claim 8, wherein the second current collector plate (340) is lifted and pressed against the second substrate tabs (122) and fixed with a jig.

10. The method of one of claims 8 and 9, wherein before providing the cap assembly (300) of the secondary battery, each of the pair of current collector plates (330, 340) are processed by a rolling process in order to provide a metal processing direction of the corresponding current collector plate, wherein the metal processing direction corresponds to a direction of the rolling process, which has caused the current collector plate to have a uniformly oriented material structure.

11. The secondary battery according to claim 1, wherein the cap assembly (300) further comprising a cap plate (310) coupled to the case (200), a first terminal (350) connected to one of the current collector plates (330, 340), a second terminal (360) connected to another one of the current collector plates (330, 340).

12. The secondary battery according to claim 11, wherein the cap assembly (300) insulatingly coupled to the first terminal (350) and electrically connected to the second terminal (360).

13. The secondary battery according to claim 11 or 12, wherein the cap assembly (300) further comprising an insulating member (328) disposed between the first terminal (350), and a conductive plate (366) disposed between the second terminal (360).

14. The secondary battery according to claim 11, wherein the current collector plate (330) connected to the first electrode plate (110), which is a negative electrode plate via the first substrate tab, and connected to the first terminal (350).

15. The secondary battery according to claim 11, wherein the current collector plate (340) connected to the second electrode plate (120), which is a positive electrode plate via the second substrate tab, and connected to the second terminal (360).

## Patentansprüche

1. Sekundärbatterie (10), umfassend:
eine Elektrodenbaugruppe (100), die eine erste Elektrodenplatte (110) mit einer ersten Substratlasche, die sich in eine Richtung erstreckt, eine zweite Elektrodenplatte (120) mit einer zweiten Substratlasche (122), die sich in eine andere Richtung als die erste Substratlasche erstreckt, und einen Separator (130), der zwischen der ersten Elektrodenplatte (110) und der zweiten Elektrodenplatte (120) angeordnet ist, umfasst;
ein Gehäuse (200), das die Elektrodenbaugruppe (100) aufnimmt; und
eine Kappenbaugruppe (300), die das Gehäuse (200) abdichtet und ein Paar Stromkollektorplatten (330, 340) umfasst, wobei jede der Stromkollektorplatten (330, 340) elektrisch mit einer von der ersten Substratlasche und der zweiten Substratlasche (122) verbunden ist, <->
wobei die Stromkollektorplatten (330, 340) jeweils an die erste Substratlasche bzw. die zweite Substratlasche (122) lasergeschweißt sind,
**dadurch gekennzeichnet, dass**
die Richtung eines Laserschweißabschnitts (348) parallel zu einer Metallverarbeitungsrichtung der entsprechenden Stromkollektorplatte verläuft,
wobei die Metallverarbeitungsrichtung einer Richtung der Herstellungsverarbeitung entspricht, die dazu geführt hat, dass die Stromkollektorplatte eine gleichmäßig ausgerichtete Materialstruktur aufweist,
wobei die erste Substratlasche und die zweite Substratlasche (122) in eine Richtung gebogen sind, um in Oberflächenkontakt mit den jeweiligen Kollektorplatten (330, 340) zu stehen, > und
wobei die erste Substratlasche und die zweite Substratlasche (122) durch Laserschweißen an auf den Rückseiten der jeweiligen Kollektorplatten (330, 340) ausgebildeten Rückwülsten angeschweißt sind.

2. Sekundärbatterie nach Anspruch 1, wobei die Metallverarbeitungsrichtung eine Ausrichtung von Oberflächenkomponenten der Stromkollektorplatte (330, 340) ist, die durch Walzen gebildet wird.

3. Sekundärbatterie nach einem der vorhergehenden Ansprüche, wobei die erste Elektrodenplatte (110), die zweite Elektrodenplatte (120) und der Separator (130) zusammengestapelt sind, und
wobei die Richtung des Laserschweißabschnitts (348) senkrecht zu einer Anordnungsrichtung der ersten Elektrodenplatte (110) und der zweiten Elektrodenplatte (120) in der Elektrodenbaugruppe steht.

4. Sekundärbatterie nach einem der vorhergehenden Ansprüche, wobei die Stromkollektorplatte (330, 340) eine Plattenform aufweist, und
wobei Schweißbereiche (342) der Stromkollektorplatte (340) in einer Längenrichtung getrennt und geteilt werden.

5. Sekundärbatterie nach Anspruch 4, wobei ein vorstehender Abschnitt (344) der Stromkollektorplatte (330, 340) in der Längenrichtung gebogen ist, um von der Elektrodenbaugruppe (100) nach außen vorzustehen, und
wobei die Schweißbereiche (342) der Stromkollektorplatte (330, 340) in Bezug auf den vorstehenden Abschnitt (344) zur Elektrodenbaugruppe (100) hin gebogen sind.

6. Sekundärbatterie nach Anspruch 4 oder 5, wobei beide Enden (346) der Stromkollektorplatte (330, 340) weiter nach außen vorstehen als der Schweißbereich (342).

7. Sekundärbatterie nach einem der vorhergehenden Ansprüche, wobei die Stromkollektorplatte (330) aus dem gleichen Material wie die entsprechende Elektrodenplatte (110) besteht.

8. Verfahren zur Herstellung einer Sekundärbatterie, wobei das Verfahren die folgenden Schritte umfasst:
i) Bereitstellen einer Sekundärbatterie, die Folgendes umfasst:
eine Elektrodenbaugruppe (100), die eine erste Elektrodenplatte (110) mit einer ersten Substratlasche, die sich in eine Richtung erstreckt, eine zweite Elektrodenplatte (120) mit einer zweiten Substratlasche (122), die sich in eine andere Richtung als die erste Substratlasche erstreckt, und einen Separator (130), der zwischen der ersten Elektrodenplatte (110) und der zweiten Elektrodenplatte (120) angeordnet ist, umfasst;
ein Gehäuse (200), das die Elektrodenbaugruppe (100) aufnimmt; und
eine Kappenbaugruppe (300), die das Gehäuse (200) abdichtet und ein Paar Stromkollektorplatten (330, 340) umfasst; und
ii) elektrisches Verbinden jeder der Stromkollektorplatten (330, 340) mit einer von der ersten Substratlasche und der zweiten Substratlasche (122); <->
wobei das elektrische Verbinden durch Laserschweißen erfolgt und **dadurch gekennzeichnet, dass** die Richtung des Laserschweißens parallel zu einer Metallverarbeitungsrichtung der entsprechenden Stromkollektorplatte durchgeführt wird, um einen Laserschweißabschnitt (348) zu bilden,
wobei die Metallverarbeitungsrichtung einer Richtung der Herstellungsverarbeitung entspricht, die dazu geführt hat, dass die Stromkollektorplatte eine gleichmäßig ausgerichtete Materialstruktur aufweist; <
wobei vor Schritt ii) die erste Substratlasche und die zweite Substratlasche (122) in eine Richtung gebogen werden, um in Oberflächenkontakt mit den jeweiligen Stromkollektorplatten (330, 340) zu stehen; >
und
wobei das elektrische Verbinden der ersten Substratlasche und der zweiten Substratlasche das Bilden von Rückwülsten auf einer Rückseite der jeweiligen Stromkollektorplatten (330, 340) durch Laserschweißen umfasst.

9. Verfahren nach Anspruch 8, wobei die zweite Stromkollektorplatte (340) angehoben und gegen die zweiten Substratlaschen (122) gedrückt und mit einer Spannvorrichtung fixiert wird.

10. Verfahren nach einem der Ansprüche 8 und 9, wobei vor dem Bereitstellen der Kappenbaugruppe (300) der Sekundärbatterie jede des Paars von Stromkollektorplatten (330, 340) durch einen Walzprozess verarbeitet wird, um eine Metallverarbeitungsrichtung der entsprechenden Stromkollektorplatte bereitzustellen, wobei die Metallverarbeitungsrichtung einer Richtung des Walzprozesses entspricht, der dazu geführt hat, dass die Stromkollektorplatte eine gleichmäßig ausgerichtete Materialstruktur aufweist.

11. Sekundärbatterie nach Anspruch 1, wobei die Kappenbaugruppe (300) weiterhin eine mit dem Gehäuse (200) gekoppelte Kappenplatte (310), einen ersten Anschluss (350), der mit einer der Stromkollektorplatten (330, 340) verbunden ist, und einen zweiten Anschluss (360), der mit einer anderen der Stromkollektorplatten (330, 340) verbunden ist, umfasst.

12. Sekundärbatterie nach Anspruch 11, wobei die Kappenbaugruppe (300) isolierend mit dem ersten Anschluss (350) gekoppelt und elektrisch mit dem zweiten Anschluss (360) verbunden ist.

13. Sekundärbatterie nach Anspruch 11 oder 12, wobei die Kappenbaugruppe (300) außerdem ein Isolierelement (328), das zwischen dem ersten Anschluss (350) angeordnet ist, und eine leitende Platte (366), die zwischen dem zweiten Anschluss (360) angeordnet ist, umfasst.

14. Sekundärbatterie nach Anspruch 11, wobei die Stromkollektorplatte (330) über die erste Substratlasche mit der ersten Elektrodenplatte (110), die eine negative Elektrodenplatte ist, und mit dem ersten Anschluss (350) verbunden ist.

15. Sekundärbatterie nach Anspruch 11, wobei die Stromkollektorplatte (340) über die zweite Substratlasche mit der zweiten Elektrodenplatte (120), die eine positive Elektrodenplatte ist, und mit dem zweiten Anschluss (360) verbunden ist.

## Revendications

1. Batterie secondaire (10) comportant :
un ensemble électrode (100) comportant une première plaque d'électrode (110) présentant une première languette de substrat s'étendant dans une direction, une seconde plaque d'électrode (120) présentant une seconde languette de substrat (122) s'étendant dans une autre direction que la première languette de substrat, et un séparateur (130) interposé entre la première plaque d'électrode (110) et la seconde plaque d'électrode (120) ;
un boîtier (200) accueillant l'ensemble électrode (100) ; et
un ensemble capuchon (300) scellant le boîtier (200) et comportant une paire de plaques collectrice de courant (330, 340), chacune des plaques collectrices de courant (330, 340) étant connectée électriquement à l'une de la première languette de substrat et de la seconde languette de substrat (122),
dans laquelle la première languette de substrat et la seconde languette de substrat (122) sont courbées dans une direction pour être en contact de surface avec les plaques collectrices (330, 340) respectives,
dans laquelle les plaques collectrices de courant (330, 340) sont soudées au laser à la première languette de substrat et à la seconde languette de substrat (122), respectivement,
**caractérisée en ce que** la direction d'une partie de soudage laser (348) est parallèle à une direction de traitement du métal de la plaque collectrice de courant correspondante,
dans laquelle la direction de traitement du métal correspond à une direction de traitement de fabrication, qui a amené la plaque collectrice de courant à avoir une structure de matériau uniformément orientée, et
dans laquelle la première languette de substrat et la seconde languette de substrat (122) sont soudées à des bourrelets arrière formés sur des surfaces arrière des plaques collectrices (330, 340) respectives par soudage laser.

2. Batterie secondaire selon la revendication 1, dans laquelle la direction de traitement du métal est une orientation de composants de surface de la plaque collectrice de courant (330, 340) qui est formée par laminage.

3. Batterie secondaire selon l'une des revendications précédentes, dans laquelle la première plaque d'électrode (110), la seconde plaque d'électrode (120) et le séparateur (130) sont empilés ensemble, et
dans laquelle la direction de la partie de soudage laser (348) est perpendiculaire à une direction d'agencement de la première plaque d'électrode (110) et de la seconde plaque d'électrode (120) dans l'ensemble électrode.

4. Batterie secondaire selon l'une des revendications précédentes, dans laquelle la plaque collectrice de courant (330, 340) présente une forme de plaque, et
dans laquelle des régions de soudure (342) de la plaque collectrice de courant (340) sont séparées et divisées dans une direction de longueur.

5. Batterie secondaire selon la revendication 4, dans laquelle une partie saillante (344) de la plaque collectrice de courant (330, 340) dans la direction de longueur est courbée pour faire saillie vers l'extérieur à partir de l'ensemble électrode (100), et
dans laquelle les régions de soudure (342) de la plaque collectrice de courant (330, 340) par rapport à la partie saillante (344) sont courbées vers l'ensemble électrode (100).

6. Batterie secondaire selon les revendications 4 ou 5, dans laquelle les deux extrémités (346) de la plaque collectrice de courant (330, 340) font saillie vers l'extérieur plus loin que la région de soudure (342).

7. Batterie secondaire selon l'une des revendications précédentes, dans laquelle la plaque collectrice de courant (330) est faite du même matériau que la plaque d'électrode (110) correspondante.

8. Procédé de fabrication d'une batterie secondaire, dans lequel le procédé comporte les étapes suivantes :
i) la fourniture d'une batterie secondaire comportant :
un ensemble électrode (100) comportant une première plaque d'électrode (110) présentant une première languette de substrat s'étendant dans une direction, une seconde plaque d'électrode (120) présentant une seconde languette de substrat (122) s'étendant dans une autre direction que la première languette de substrat, et un séparateur (130) interposé entre la première plaque d'électrode (110) et la seconde plaque d'électrode (120) ;
un boîtier (200) accueillant l'ensemble électrode (100) ; et
un ensemble capuchon (300) scellant le boîtier (200) et comportant une paire de plaques collectrices de courant (330, 340) ; et
ii) la connexion électrique de chacune des plaques collectrices de courant (330, 340) à l'une de la première languette de substrat et de la seconde languette de substrat (122) ;
dans lequel avant l'étape ii), la première languette de substrat et la seconde languette de substrat (122) sont courbées dans une direction pour être en contact de surface avec les plaques collectrices de courant (330, 340) respectives ;
dans lequel la connexion électrique est réalisée par soudage laser et **caractérisée en ce que** la direction du soudage laser est réalisée parallèlement à une direction de traitement du métal de la plaque collectrice de courant correspondante afin de former une partie de soudage laser (348),
dans lequel la direction de traitement du métal correspond à une direction de traitement de fabrication, qui a amené la plaque collectrice de courant à avoir une structure de matériau uniformément orientée ; et
dans lequel la connexion électrique de la première languette de substrat et de la seconde languette de substrat comporte la formation de bourrelets arrière sur une surface arrière des plaques collectrices de courant (330, 340) respectives par le soudage laser.

9. Procédé selon la revendication 8, dans lequel la seconde plaque collectrice de courant (340) est soulevée et pressée contre les secondes languettes de substrat (122) et fixée avec un gabarit.

10. Procédé selon l'une des revendications 8 et 9, dans lequel, avant la fourniture de l'ensemble capuchon (300) de la batterie secondaire, chacune de la paire de plaques collectrices de courant (330, 340) est traitée par un processus de laminage afin de fournir une direction de traitement du métal de la plaque collectrice de courant correspondante, dans lequel la direction de traitement du métal correspond à une direction du processus de laminage, qui a amené la plaque collectrice de courant à avoir une structure de matériau uniformément orientée.

11. Batterie secondaire selon la revendication 1, dans laquelle l'ensemble capuchon (300) comporte en outre une plaque de capuchon (310) couplée au boîtier (200), une première borne (350) connectée à l'une des plaques collectrices de courant (330, 340), une seconde borne (360) connectée à une autre des plaques collectrices de courant (330, 340).

12. Batterie secondaire selon la revendication 11, dans laquelle l'ensemble capuchon (300) est couplé de manière isolante à la première borne (350) et connecté électriquement à la seconde borne (360).

13. Batterie secondaire selon la revendication 11 ou 12, dans laquelle l'ensemble capuchon (300) comporte en outre un organe isolant (328) disposé entre la première borne (350) et une plaque conductrice (366) disposée entre la seconde borne (360).

14. Batterie secondaire selon la revendication 11, dans laquelle la plaque collectrice de courant (330) est connectée à la première plaque d'électrode (110), qui est une plaque d'électrode négative via la première languette de substrat, et connectée à la première borne (350).

15. Batterie secondaire selon la revendication 11, dans laquelle la plaque collectrice de courant (340) est connectée à la seconde plaque d'électrode (120), qui est une plaque d'électrode positive via la seconde languette de substrat, et connectée à la seconde borne (360).
